(19) **Europäisches Patentamt**

**European Patent Office**

**Office européen des brevets**

(11) **EP 0 823 795 B1**

(12) **EUROPEAN PATENT SPECIFICATION**

(45) Date of publication and mention
of the grant of the patent:
**29.10.2003   Bulletin 2003/44**

(51) Int Cl.[7]: **H04B 7/08**, H04B 7/216,
H04B 1/707

(21) Application number: **97113313.7**

(22) Date of filing: **01.08.1997**

(54) **Path-diversity method and system for spread spectrum receivers**

Verfahren und System zur Weg-Diversity für Spreizspektrumempfänger

Procédé et système de diversité à voie pour récepteurs à spectre étalé

(84) Designated Contracting States:
**DE FR GB**

(30) Priority: **09.08.1996 JP 22755496**

(43) Date of publication of application:
**11.02.1998   Bulletin 1998/07**

(73) Proprietors:
- **Yozan Inc.**
  **Tokyo 155-0031 (JP)**
- **NTT DoCoMo, Inc.**
  **Tokyo 100-6150 (JP)**

(72) Inventors:
- **Shou, Guoliang, c/o YOZAN INC.**
  **Tokyo 155 (JP)**

- **Zhou, Changming, c/o YOZAN INC.**
  **Tokyo 155 (JP)**
- **Zhou, Xuping, c/o YOZAN INC.**
  **Tokyo 155 (JP)**
- **Sawahashi, Mamoru**
  **Yokohama-shi, Kanagawa 236 (JP)**
- **Adachi, Fumiyuki**
  **Yokohama-shi, Kanagawa 236 (JP)**

(74) Representative: **Grünecker, Kinkeldey,**
**Stockmair & Schwanhäusser Anwaltssozietät**
**Maximilianstrasse 58**
**80538 München (DE)**

(56) References cited:
**EP-A- 0 661 831          WO-A-91/20142**
**US-A- 4 313 211**

**Description**

The present invention relates to spread spectrum communications for mobile communications and wireless Local Area Networks, especially a path-diversity receiving system in which pilot signals are included in information signals.

In spread spectrum communications, there must be compensation in signals rake processing for the errors due to fading in the received signals.

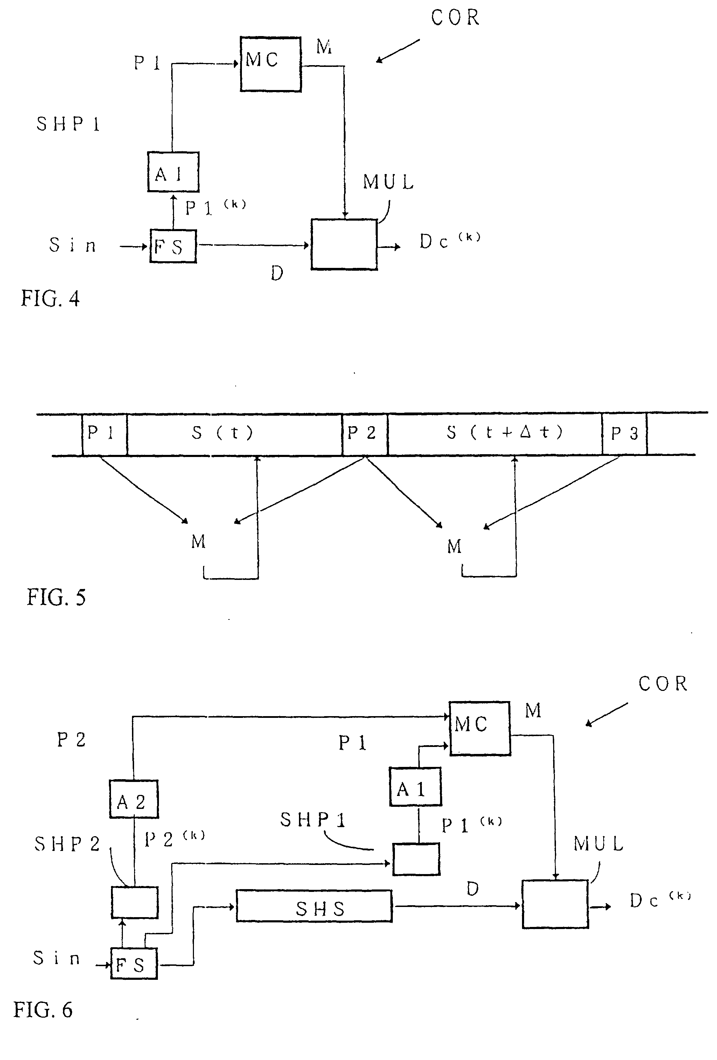

FIG. 5 shows such signals, in which known pilot signals P1 and P2 (signals with a plurality of bits, for example, Np bits) are input before and after the predetermined quantity of information signal S(t) (a signal with a plurality of bits). According to these pilot signals, phase errors caused by fading are presumed with respect to the signals between the pilot signals, and compensated. Here, assuming that the pilot signals are $(P1^{(k)}i+j \cdot P1^{(k)}q)$ and $(P2^{(k)}i+j \cdot P2^{(k)}q)$, each information signal symbol is $(Di+j \cdot Dq)$, $P1^{(k)}$ and $P2^{(k)}$ with bits 1 and P2, respectively, are averaged by averaging circuits A1 and A2, and all the pilot signals in the send mode are $(1+j \cdot 0)$ (other patterns can be adopted), the average value E of information signal error vectors is expressed by formulas (1) to (5):

$$E = \frac{P1i + P2i}{2} + j \cdot \frac{P1q + P2q}{2} \tag{1}$$

$$P1i = \frac{1}{Np} \sum_{k=1}^{Np} P1^{(k)}i \tag{2}$$

$$P1q = \frac{1}{Np} \sum_{k=1}^{Np} P1^{(k)}q \tag{3}$$

$$P2i = \frac{1}{Np} \sum_{k=1}^{Np} P2^{(k)}i \tag{4}$$

$$P2q = \frac{1}{Np} \sum_{k=1}^{Np} P2^{(k)}q \tag{5}$$

Compensating vector M according to the formulas above is given by a complex conjugate number. P1i, P1q, P2i and P2q are the average values of the pilot signal trains, which reduce the influence of noise. The compensation coefficient is calculated by formula (6):

$$M = Mi + j \cdot Mq = \frac{P1i + P2i}{2} - j \cdot \frac{P1q + P2q}{2} \tag{6}$$

(6)

Multiplying the value of formula (6) by each information signal symbol, compensates the influence of fading. When Dc stands for the compensated information symbol, it is calculated by formula (7):

$$Dc = D \cdot M = (Di + j \cdot Dq)(Mi + j \cdot Mq) = (Di \cdot Mi - Dq \cdot Mq) + j \cdot (Dq \cdot Mi + Di \cdot Mq) \qquad (7)$$

Assuming the in-phase components and the quadrature components after the compensation of N numbers of paths to be Dci1 to DciN and Dcq1 to DcqN, respectively, the in-phase components Dci and quadrature components Dcq of signals after rake composition are calculated by accumulations of signals in each path as in formulas (8) and (9):

$$Dci = \sum_{k=1}^{N} Dcik$$

$$(8)$$

$$Dcq = \sum_{k=1}^{N} Dcqk$$

$$(9)$$

FIG. 6 shows the phase compensating circuit COR for performing each processing above. In FIG. 6, receiving signal Sin undergoes proper timing adjustment and is input to two pilot signal holding circuits SHP1 and SHP2 and information signal holding circuit SHS. Each bit P1(k) and P2(k) of P1 and P2 held by SHP1 and SHP2, respectively, is averaged by averaging circuit A1 and A2, respectively, and pilot signals P1 and P2 are calculated. Compensation coefficient calculating circuit MC calculates compensation coefficient M according to these pilot signals. Compensation coefficient M is input to multiplication circuit MUL, multiplied by information signal D, and the signal Dck is output after compensation.

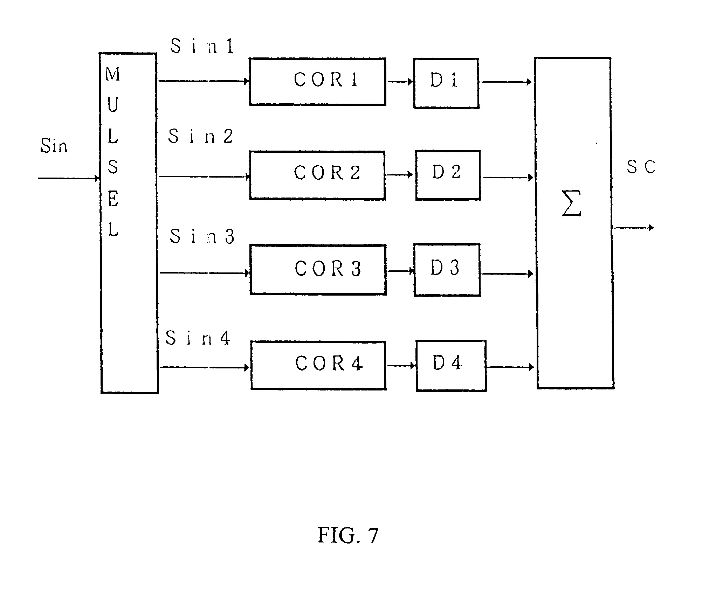

FIG. 7 shows a rake processing circuit which also performs phase compensation of a plurality of paths (four paths in FIG. 7 as an example). First, multipath signals greater than a predetermined level are selected among the input signals by multipath selecting circuit MULSEL. The selected signals are input to compensation circuits COR1 to COR4, arrayed in four phases corresponding to the first to the fourth paths, respectively. Their outputs are then input to accumulating circuit Σ after being appropriately delayed by delaying circuits D1 to D4, respectively. Outputs SCs of Σ correspond to Dci and Dcq above.

EP 0 661 831 A2 describes a DS/CDMA receiver using parallel operating multi-purposes correlators. At a chip rate much higher than a symbol rate, the symbols of the encoded signal are spread with pseudo-random number spreading sequences commonly assigned to this service area in which the mobile is currently located. The pilot signal which may be a series of all zeros or ones is spread in the same chip rate with the same pseudo-random number sequence. A receiver according to this reference has a sync acquisition mode and a tracking mode. All Walsh codes supplied to all correlators are all-zero Walsh codes when the receiver is in the sync acquisition mode and some of these codes change to distinct Walsh codes of different Walsh code numbers when it is in tracking mode. Since the pilot signal was spread at the transmitter with the all-zero Walsh code, the outputs of two multipliers represent the in-phase and quadrature components of the despread pilot signal during the sync acquisition mode and represent the in-phase and quadrature components of the despread data signal during the tracking mode. During the tracking mode, the phase positions of the despreading code are set according to the high correlation values.

WO 91/20142 discloses a diversity combining technique to counteract effects of channel fading on a transmitted information signal. In diversity receive paths estimates of complex channel gain are computed based upon pilot symbols inserted from time to time in the transmitted information symbol stream. Phase corrected and weighted samples from the diversity paths are summed prior to the decision process.

It is the object of this invention to provide an improved path-diversity receiving method and a path-diversity receiving system.

This object is achieved by a path-diversity receiving methods according to claims 1 and a path-diversity receiving system according to claim 2.

In the following the preferred embodiment will be described referring to the accompanying drawings.

FIG. 1 shows a conceptual diagram of the first embodiment of a path-diversity receiving system according to the present invention.

FIG. 2 shows a block diagram of a phase compensating circuit for the first embodiment.

FIG. 3 shows a conceptual diagram of an alternative embodiment not claimed in the present invention.

FIG. 4 shows a block diagram of a phase compensating circuit for an alternative embodiment not claimed in the present invention.

FIG. 5 shows a conceptual diagram of a conventional receiving system.

FIG. 6 shows a block diagram of a conventional phase compensating circuit.

FIG. 7 shows a block diagram of a path-diversity receiving system.

Hereinafter, the preferred embodiment of a path-diversity receiving system according to the present invention is described with reference to the attached drawings.

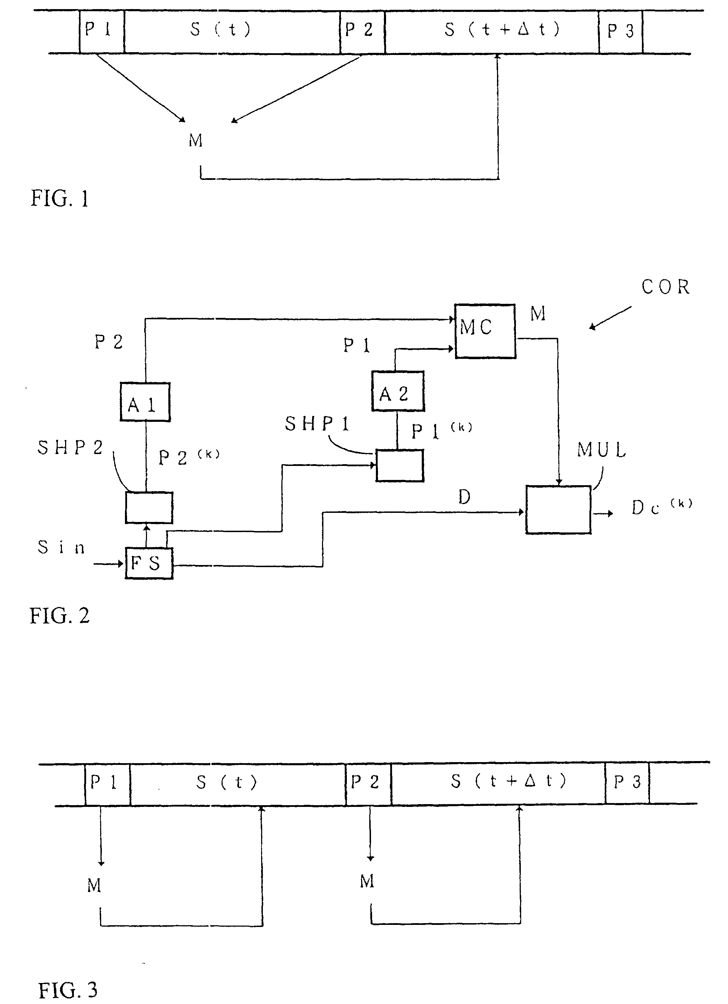

In the signal train in FIG. 1, assuming that the information signal between pilot signals P1 and P2 is S(t), and that on the next information block is $S(t+\Delta t)$, the compensation coefficient M calculated according to pilot signals P1 and P2 is used to compensate the information signal $S(t+\Delta t)$. That is, to compensate an information signal on a point, a compensating coefficient according to the pilot signal prior to that point is used. Therefore, the information signal which should be held for compensation is only the information symbol just on the point to multiple the compensation coefficient.

FIG. 2 shows a phase compensating circuit for the first embodiment, with all components the same as or corresponding to those in FIG. 6 given the same symbols. This circuit differs from conventional ones by incorporating an information signal holding circuit. Conventionally, a holding capacity with the size of S(t) was necessary, for example, 36 symbols (=72 bits), but the present invention does not need such a capacity. When four-path processing is performed as in FIG. 7, the conventional holding capacity should be enough for 288 bits; however, the present invention can eliminate the holding circuit.

In such a way, a phase compensating circuit can be small-sized.

FIG. 3 shows an alternative implementation not claimed in the present invention, wherein pilot block signal P1 is used to compensate the information signal S(t) in the block just after it. Compensating coefficient M calculated according to pilot signal P1 is used to compensate information signal S(t). That is, compensating an information signal on a given point entails using the compensating coefficient according to the pilot signal at the point just before it. Therefore, information signals can be compensated in real time, and need not be held.

FIG. 4 shows a phase compensating circuit for an alternative implementation not claimed in the present invention, with all components the same as or corresponding to those in FIG. 2 given the same symbols. In FIG. 4, receiving signals Sin are divided into a pilot block and an information signal block in frame synchronizing circuit FS, and so only the pilot signals are input to averaging circuit A1, and information signals are input to multiplication circuit MUL. The outputs of A1 are input to compensating coefficient calculating circuit MC, and compensating coefficient M is input to MUL from MC.

Compared with the preferred embodiment, this whole circuit is simplified because sampling and holding circuits SHP1 and SHP2 are eliminated, and only one averaging circuit is adequate.

As mentioned above, in the path-diversity receiving system for spread spectrum communications of the present invention, the phase compensating circuit is small because the compensating coefficient is calculated according to the signals of two pilot blocks prior to the information signals.

## Claims

1. A path-diversity receiving method comprising:

extracting known pilot signal blocks (P1, P2, P3) from received signals,

compensating information signal phases according to said pilot signal blocks (P1, P2, P3),

calculating a compensating coefficient (M) and

compensating information signal phases,

**characterised in that**
the method is designed for spread spectrum communications,
said compensating coefficient (M) is calculated according to a pair of pilot signal blocks surrounding an information block (S(t)) and
said information signals following the latter pilot signal block are compensated with said compensating coefficient (M).

2. A path-diversity receiving system comprising:

   (i) a pair of pilot signal holding circuits (SHP1, SHP2), each for holding a pilot signal block (P1, P2, P3);

   (ii) a compensating coefficient calculating circuit (MC) for calculating compensating coefficients (M) according to said pilot block signals; and

   (iii) a multiplying circuit (MUL) for multiplying said compensating coefficients (M) by information signal symbols,

   **characterized in that**
   said path diversity receiving system is designed for spread spectrum communications, said pair of pilot signal holding circuits hold a pair of pilot block signals surrounding an information signal block (S(t)) and information signals following the latter pilot signal block are compensated with the compensation coefficient (M) calculated from said pair of pilot signal blocks.

**Patentansprüche**

1. Mehrwegeführungs(path diversity)-Empfangsverfahren, das umfasst:

   Extrahieren bekannter Pilotsignalblöcke (P1, P2, P3) aus empfangenen Signalen,

   Kompensieren von Informationssignalphasen entsprechend den Pilotsignalblöcken (P1, P2, P3),

   Berechnen eines Kompensationskoeffizienten (M) und

   Kompensieren von Informationssignalphasen,

   **dadurch gekennzeichnet, dass**:

   das Verfahren für Streuspektrumfunkverbindungen bestimmt ist,

   der Kompensationskoeffizient (M) entsprechend einem Paar Pilotsignalblöcke berechnet wird, die einen Informationsblock (S(t)) umgeben, und

   die Informationssignale, die auf den letzteren Pilotsignalblock folgen, mit dem Kompensationskoeffizienten (M) kompensiert werden.

2. Mehrwegeführungs-Empfangssystem, das umfasst:

   (a) ein Paar Pilotsignal-Halteschaltungen (SHP1, SHP2), die jeweils einen Pilotsignalblock (P1, P2, P3) halten;

   (b) eine Kompensationskoeffizient-Berechnungsschaltung (MC) zum Berechnen von Kompensationskoeffizienten (M) entsprechend den Pilotsignalblöcken; und

   (c) eine Multiplizierschaltung (MUL) zum Multiplizieren der Kompensationskoeffizienten (M) mit Informationssignalsymbolen,

**dadurch gekennzeichnet, dass**:

das Mehrwegeführungs-Empfangssystem für Streuspektrumfunkverbindungen bestimmt ist, wobei das Paar Pilotsignal-Halteschaltungen ein Paar Pilotsignalblöcke hält, die einen Informationssignalblock (S(t)) umgeben, und Informationssignale, die auf den letzteren Pilotsignalblock folgen, mit dem Kompensationskoeffizienten (M) kompensiert werden, der aus dem Paar Pilotsignalblöcke berechnet wird.

**Revendications**

1. Procédé de réception en diversité de trajets comprenant :

   l'extraction de blocs de signaux pilotes connus (P1, P2, P3) de signaux reçus,
   la compensation de phases de signaux d'informations conformément auxdits blocs de signaux pilotes (P1, P2, P3),
   le calcul d'un coefficient de compensation (M) et
   la compensation de phases de signaux d'informations,

   **caractérisé en ce que**
   le procédé est conçu pour des communications à étalement de spectre,
   ledit coefficient de compensation (M) est calculé conformément à deux blocs de signaux pilotes entourant un bloc d'informations (S(t)) et
   lesdits signaux d'informations suivant le dernier bloc de signal pilote sont compensés par ledit coefficient de compensation (M).

2. Système de réception en diversité de trajets comprenant :

   (i) deux circuits de maintien de signaux pilotes (SHP1, SHP2), chacun pour maintenir un bloc de signal pilote (P1, P2, P3) ;
   (ii) un circuit de calcul de coefficient de compensation (MC) pour calculer des coefficients de compensation (M) conformément auxdits signaux de blocs pilotes ; et
   (iii) un circuit de multiplication (MUL) pour multiplier lesdits coefficients de compensation (M) par des symboles de signaux d'informations,

   **caractérisé en ce que**
   ledit système de réception en diversité de trajets est conçu pour des communications à étalement de spectre,
   lesdits deux circuits de maintien de signaux pilotes maintiennent deux signaux de blocs pilotes entourant un bloc de signal d'informations (S(t)) et les signaux d'informations suivant le dernier bloc de signal pilote sont compensés par le coefficient de compensation (M) calculé à partir desdits deux blocs de signaux pilotes.

| P 1 | S ( t ) | P 2 | S ( t + Δ t ) | P 3 |
|-----|---------|-----|----------------|-----|

M

FIG. 1

COR

P 2

P 1

MC   M

A 1

A 2

SHP 1   P 1 $^{(k)}$

SHP 2   P 2 $^{(k)}$

MUL

D

Dc $^{(k)}$

S i n   F S

FIG. 2

| P 1 | S ( t ) | P 2 | S ( t + Δ t ) | P 3 |
|-----|---------|-----|----------------|-----|

M   M

FIG. 3

COR

P 1 → MC M

SHP1

A1

P 1 (k)

MUL

Sin → FS

D

Dc (k)

FIG. 4

| P 1 | S ( t ) | P 2 | S ( t + Δ t ) | P 3 |

M          M

FIG. 5

COR

P 2                    P 1          MC M

A 2                    A 1

SHP 2    P 2 (k)    SHP 1    P 1 (k)

MUL

SHS         D

Sin → FS                              Dc (k)

FIG. 6

FIG. 7